# EUROPEAN PATENT SPECIFICATION

(11) **EP 1 671 815 B1**
(45) Date of publication and mention of the grant of the patent: **07.11.2007**
(21) Application number: 04766949.4
(22) Date of filing: 20.09.2004
(51) Int. Cl.: B60C 17/06, B60C 17/04

(54) **DISMANTLABLE RIM COMPRISING INNER EMERGENCY WHEEL, AND TYRE FOR SAME**
ABMONTIERBARE FELGE MIT NOTLAUFINNENRAD UND REIFEN DAFÜR
JANTE DEMONTABLE A ROUE INTERNE DE SECOURS ET PNEU POUR LADITE JANTE

(30) Priority: 26.09.2003 AR 30103519
(43) Date of publication of application: 21.06.2006
(73) Proprietor: Elastomeric Systems, S.L., 28043 Madrid (ES)
(72) Inventor: ROLLA, Jose Santiago, Lujan 670 Provincia de Buenos Aires (AR)
(74) Representative: Arpe Fernandez, Manuel de
(86) International application number: PCT/ES2004/000411
(87) International publication number: WO 2005/030505

(56) References cited:
- GB-A- 849 675
- GB-A- 1 522 028
- US-A- 2 040 645
- US-A- 3 968 825
- US-A- 4 163 466
- US-A- 4 676 288
- US-A1- 2003 098 109
- US-A1- 2003 205 307
- PATENT ABSTRACTS OF JAPAN vol. 006, no. 178 (M-155) 11 September 1982 & JP 57 087 705 A (HONDA MOTOR CO LTD) 01 June 1982

## Description

### FIELD OF INVENTION

The present invention related to a tire rim which allows a vehicle to run with a flat tire. More particularly, it relates to a demountable tire rim with a spare inner wheel and tire for said tire rim which two main parts can be easily disassembled to place or remove the spare inner wheel that is placed into the wheel.

### DESCRIPTION OF PRIOR ART

Within the prior art, there is US Patent 2105317 which discloses an aircraft wheel made of two pieces. However, this tire rim is not apt to be used in automobiles and in addition, it is not prepared to carry a spare inner wheel inside.

US Patent 3037815 shows a wheel in which the tire rim has a thread to vary the tread. This wheel is intended to be used in tractors and lacks the spare inner wheel.

US Patent 4989657 is a modular wheel consisting of two main pieces and a third piece to ensure the tire grip. These pieces are joined by means of bolts but they lack other coupling means. It is not prepared for the assembly of a spare inner wheel, either.

US Patent 5022450 discloses a set of safety tire rim and demountable wheel. Both parts of the tire rim are joined by means of bolts and lack other coupling means. There is an insert to run with the flat tire which is simply added but does not determine the tire rim structure.

US-A-3968825 discloses a demountable tire rim with spare inner wheel and tire for said tire rim, which is intended to serve as assembly to a tire with which it comprises a wheel for vehicles and to one o more spare inner wheel which act with said flat tire.

GB-A-2354983 discloses an assembly adapted to retain a tyre, including a circular wheel rim comprising a flange retainer where the rim and the retainer co-operate by each having inter-engaging threaded means. A cruciform connector is wedged into groves of respective locking protrusions of the rim and retainer to prevent relative rotation.

GB-A-849675 discloses a tubeless pneumatic tyre and wheel rim assembly having and emergency ring consists of synthetic thermoplastic material. The emergency running ring is rotatably mounted on the outside of the wheel rim.

### OBJECTS AND ADVANTAGES OF THE INVENTION

The object of the present invention demountable tire rim with a spare inner wheel and tire for said tire rim according to the features in claims 1. Others additional features are related in depending claims.

An advantage of the present tire rim is that it allows to place and easily remove the spare inner wheel.

Another advantage is that it simplifies the placement and removal of tubeless tires which are easily performed and there is no need of using levers as it usually occurs with one-piece tire rims. This is very significant in low profile tires in which due to the height of their lateral walls, these ones are less flexible making manipulation in conventional tire rims difficult.

A further advantage of the present tire rim is that it is provided with assembly means like an annular depression wherein the spare inner wheel wedges and slides which allows to run with tubeless tires without them being deteriorated. All the well-known similar systems, although having their contact surfaces lubricated, do not have an annular depression for the spare wheel to be slid relative to the tire rim. Therefore, contact between the spare inner wheel and the tire causes its deterioration because the difference in diameters causes a destructive attrition between both of them.

In addition, the present tire rim is compatible with different antifriction means such as rollers at the base

In addition, the present tire rim is compatible with different antifriction means such as rollers at the base of the inner wheel or burnishing or antifriction coatings in the assembly means of said inner wheel. All this, on the one hand, facilitates the relative sliding between the inner wheel and the tire rim, and on the other hand, contact between the inner wheel and the tire, thus avoiding deterioration of the tire.

The present tire rim is compatible with the use of inner wheels made of different materials, namely plastic, thermoplastic, elastomer, flexible, semi-flexible, semi-rigid or rigid. The use of these materials and the chance of incorporating easer holes allow the inner wheel to be resistant and at the same time, light and safe.

This tire rim is also compatible with the use of spare inner wheels, either one- piece or not, for instance, consisting of three or more sectors connected to one another through flexible and strong bonding elements, which allow them to behave line one-piece wheels and allow them to be warped, lessening their major diameter so as to be placed and removed from the inside of the tire which inner mouth has a shorter diameter.

Yet a further advantage of the present tire rim is high safety. This is due to the fact that it is provided to complement threaded or bayonet type reciprocal coupling means with a plurality of connection passages wherein bolts with nut, lock-pins, annular groove with cross section washer, etc. are arranged.

A yet further advantage is that the present tire rim allows to form an aerodynamic and aesthetic wheel and its conformation allows it to adapt to measurements standarized by international regulations which govern the art. And the modified tire is intended to decrease friction with the inner wheel, determine a guided movement on it and decrease rotating displacement with reference to the tire rim upon running under flat conditions.

### DETAILED DESCRIPTION

Other characteristics and advantages of the invention will become apparent from the following description and with the help of the attached drawings, in which:
Figure 1 shows a partial and fragmented perspective sectional view of a dismountable rim with an inner tyre and a tyre for such rim according to the invention.
Figure 2 shows a detailed perspective view of the rim according to figure 1.
Figure 3 shows a cross section of the rim and the tyre according to the invention.
Figures 4-6 show cross sectional perspective views of the ancillary parts of three embodiments.
Figure 7A shows a plan view of the rim without the tyre.
Figure 7B shows a fragmented perspective view of the outer tyre.
Figures 8-10 schematically show the relevant sectional views of three embodiments of the inner tyre.
Figures 11-14 show the relevant sectional views of up to four embodiments of the inner tyre detailing its coupling to the rim.
Figures 15-21 show the relevant fragmented perspective views of up to seven embodiments of the inner tyre.
Figures 22-24 show the relevant side views of three embodiments of the inner tyre.
Figures 25A-25C show relevant views of the rim detailing its coupling to the relevant inner tyre.

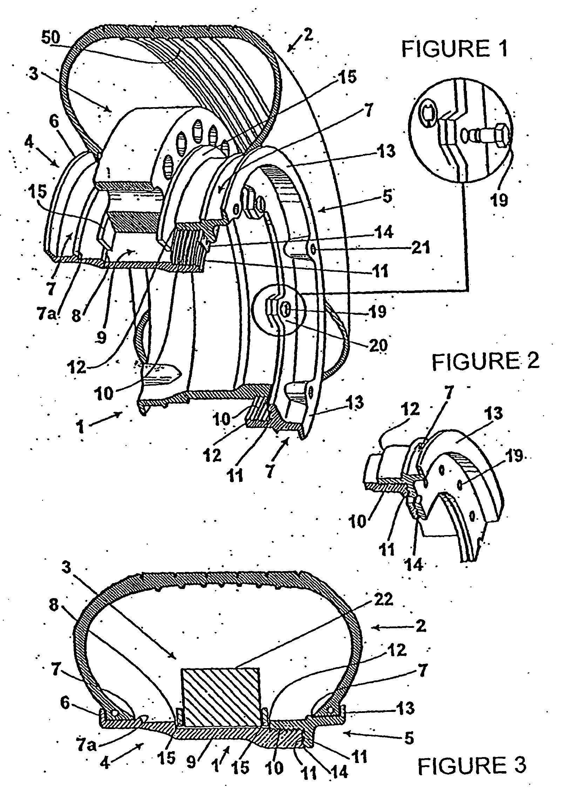

As it can be observed in figures 1 and 2, the present invention is related to a demountable tire rim (1) with spare inner wheel (3), which is integrated by two complementary annular parts (4) (5) provided with threaded reciprocal coupling means (10).

The body of the demountable tire rim (1) comprises two complementary annular parts (4)(5) which consist of a first part (4) and a second part (5). Both complementary annular parts (4) (5) are provided with each side holding rims (6)(13) for the tire (2).

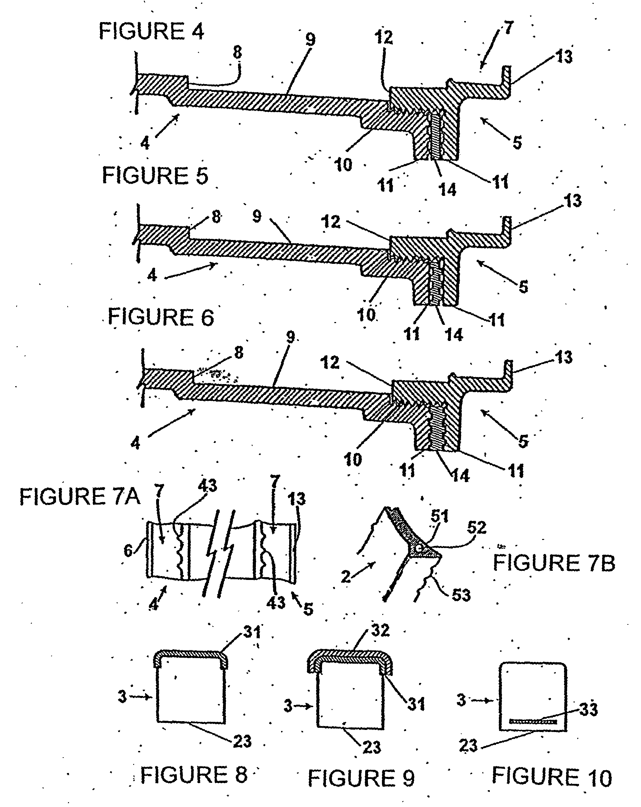

According to figure 7A, between the holding rim (6) or (13) and an adjacent rim (7a) a wedge is formed (7) for the tire (2) bead (51). The possibility that the adjacent rim (7a) has gearing means (43) with similar means (53) provided by the tire (2) bead (51) has been provided; this allows an integral assembly between the tire rim (1) and the tire (2) (See figure 7b).

In the central part of the tire rim (1) there are assembly means for one or more spare wheels (3). These assembly means comprise a central depression (9). That may be even or grooved (17) limited by side edges (8) (12) and central rims (15), which are supported against said side edges (8) (12). When there are two or more spare wheels (3), separating rims (16) can be added (16). (See figures 1, 2, 4, 5 and 6).

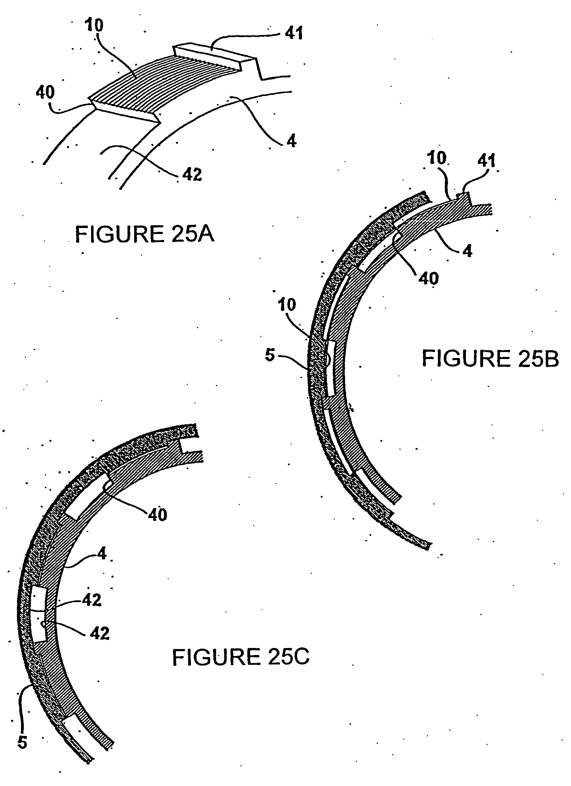

The two complementary annular parts (4) (5) have reciprocal coupling means based on threads (10). (See figures 1 and 2). In one case, the reciprocal coupling means consist of each continuous threads (10) formed at the above mentioned complementary annular parts (4)(5). In another case, the reciprocal coupling means consist of a plurality of threaded sectors (40) on the edge of the whole perimeter of both adjacent segments of the tire rim (1) which have, on one of their ends, an elevated part as a stop (41), inserted with sectors without thread (42), which surface is at a lower level in relation to the threaded sectors (40), these ones being different sectors, of the same width, so that they can be inserted to one another, to be fixed by means of threading spindrift movements. (See figures 25A, 25B and 25C).

The reciprocal coupling means are complemented by means of interconnection and fixation means (19) of the complementary annular parts (4)(5). These interconnection and fixation means (19) comprise a plurality of equal and equally-spaced openings distributed on flanges placed on the perimeter of both edges, which, one opposite the other form passages for fixation screws or for bolts with lock-pin washer (See detail in figure 1 and figure 2).

In figures 1, 4, 5 and 6, it can be seen that both complementary annular parts (4) (5) define a joint area (11) that may be even or with annular ledges. The annular ledges can be facing or insertable. In this joint area, there is an elastomeric joint (14) that may also be even or with annular ledges.

Concerning the spare wheel (3), it can be grooved (23) (24) (25) or even (22) in one- piece, one- piece with recesses (29) on the even periphery (22), one-piece with recesses (30) on the inner edge (23) or either comprised by sectors related to an annular member which goes through them.

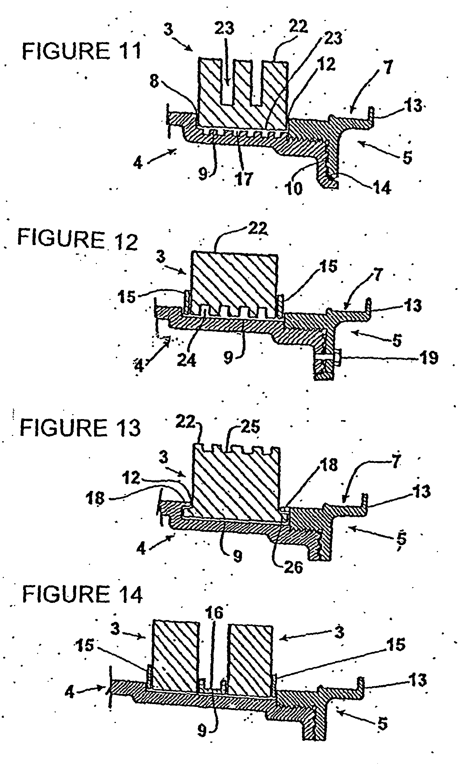

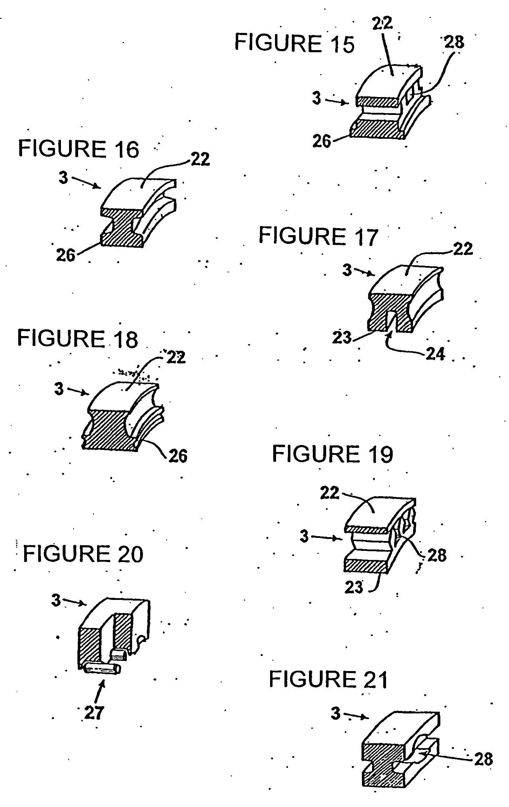

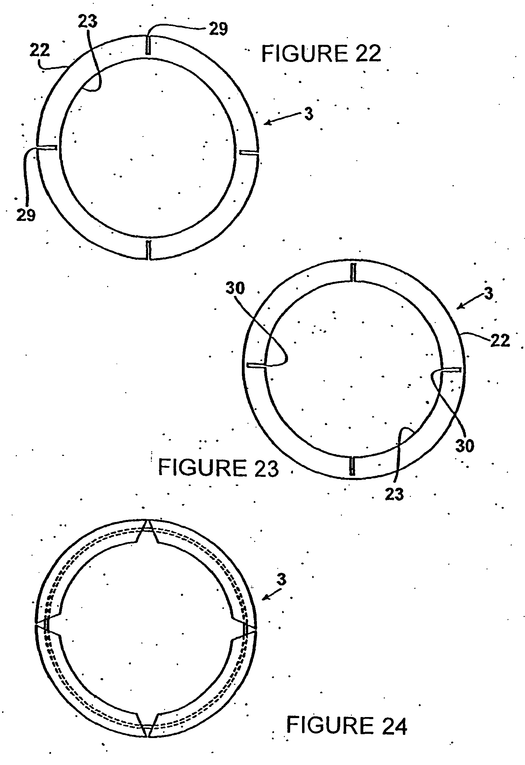

Different examples of spare wheels (3) are illustrated in figures 7, 8, 9, 10, 11, 12, 13, 14, 15, 16, 17, 18, 19, 20, 21, 22, 23 and 24.

With regard to the tire, in addition to the gearing means (53), it possesses a reinforcement annular member (52) arranged within the bead (51) (See figures 3 and 7B).

In Figures 1 and 2, some inner ledges (50) of the above mentioned tire (2), can be seen to face and facilitate contact with the spare wheel (3) under flat tire running conditions.

It is evident that when the present invention is put into practice, modifications may be made regarding certain construction and shape details, without departing from the basic principles, which are clearly encompassed in the following claims.

## Claims

1. An assembly of a demountable tire rim, at least a spare inner wheel (3) and a tyre (2) forming a wheel for vehicles wherein the at least spare inner wheel has a diameter larger than said tire rim diameter and which acts with said tire when flat,:
a) comprising a body of the tire rim (1) consisting of at least two complementary annular parts (4,5) of which both side parts provide each side holding rims (6-7a, 13-7a) of the tire;
b) wherein said two complementary annular parts are provided with reciprocal coupling means (10);
c) wherein assembly means (8, 9, 12, 17, 18) are conformed between the complementary annular parts for, at least, spare inner wheel; and
d) wherein the tire (2) to be used with this tire rim and inner wheel shows modifications to adapt it to running under flat condition, said modifications consisting in inner ledges (50) formed on inner side of the tire tread and a bead (51) formed all around the perimeter in the both inner edges of the tire of its minor diameter,
**characterized in that**
the reciprocal coupling means (10) consist of a plurality of each threaded sectors (40) on the edge of the whole perimeter of the two complementary annular parts (4, 5) of the tire rim, said plurality of each threaded sectors having on one of their ends, an elevated part (41) acting as stop,
said elevated part being suitable to be inserted with non threaded sectors (42) which surface is at a lower level relative to the threaded sectors, these different sectors being of the same width, so that they may be inserted to one another to be fixed by means of threading spindrift movements.

2. An assembly according to claim 1 wherein the complementary annular parts (4, 5) having further contact and tightness surfaces (11) cooperating with the reciprocal coupling means (10).

3. An assembly according to claim 2 wherein the contact and tightness surfaces (11) are provided with a plurality of concentric annular ledges which have a reciprocal insertion arrangement to one another.

4. An assembly according to claims 2-3 wherein between the opposite contact and tightness surfaces (11), is provided a laterally flat annular elastomeric joint which side surfaces are even.

5. An assembly according to claims 2-3 wherein between the opposite contact and tightness surfaces (11), is provided a laterally flat annular elastomeric joint with a plurality of concentric annular edges on both side surfaces.

6. An assembly according to any of preceding claims wherein the reciprocal coupling means (10) are complemented by interconnection and fixation means (19-19).

7. An assembly according to claim 6 wherein the interconnection and fixation means (19-19) between the complementary annular parts (4, 5) consist of a plurality of sets of equal and equally-spaced openings distributed on flanges (20) placed at the perimeter of both edges, which faced to each other form passages for fixation screws (19).

8. An assembly according to claim 6 wherein the interconnection and fixation means (19) between the complementary annular parts (4, 5) consist of a plurality of sets of a equal and equally-spaced openings distributed on flanges (20) placed at the perimeter of both edges, which faced to each other form passages for lock-pin bolts (19).

9. An assembly according to claim 1 wherein the assembly means for the spare inner wheel consist of an annular depression (9) which side edges (8, 12) are provided by both complementary annular parts (4, 5).

10. An assembly according to claim 9 wherein the annular depression (9) consists of a sliding and slipping track for the spare inner wheel (3).

11. An assembly according to claims 9-10 wherein the annular depression (9) presents annular grooves (17) which decrease contact and friction surface with the spare inner wheel.

12. An assembly according to claims 1 and 9 wherein the assembly means for the spare inner wheel (3) further comprising each side holding elastic rims (15) of said spare inner wheel and said side holding rims are arranged against the side edges (8, 12) provided by both complementary annular parts (4, 5), overrunning their height.

13. An assembly according to claim 1 wherein comprises assembly means for more than one spare inner wheel (3), which means consist of an annular depression (9), divided in, at least, two sectors, by means of, at least, an intermediate elastic rim (16).

14. An assembly according to claim 1 wherein the assembly means for the spare inner wheel (3) comprise the annular depression (9) and side retention means (18) of said inner wheel.

15. An assembly according to claim 14 wherein the spare inner wheel (3) forms cooperation means (26) with the retention means (18).

16. An assembly according to claim 1 which comprises bearing means which as bearing rollers (27) are inserted between the spare inner wheel (3) and the bottom of the annular depression (9).

17. An assembly according to claim 1 wherein the spare inner wheel (3) is made of a single material.

18. An assembly according to claim 1 wherein the spare inner wheel (3) consisting of a plurality of segments mutually related by strong and flexible joining means.

19. An assembly according to claim 1 wherein the spare inner wheel (3) is made of elastomeric material.

20. An assembly according to claim 1 the inner wheel (3) is made of plastic material.

21. An assembly according to claim 1 wherein the spare inner wheel (3) is made of a light metal.

22. An assembly to claim 1 wherein the spare inner wheel (3) is made of synthetic fibers and a material which compacts them.

23. An assembly according to claim 1 wherein the spare inner wheel (3) has a structural reinforcement inner core (33).

24. An assembly according to claim 1 wherein the spare inner wheel (3) is provided with a metal coating (31) on its major surface diameter provided with an outer layer (32) consisting of polytetrafluoroethylene polymer (PTFE).

25. An assembly according to claim 1 wherein the spare inner wheel (3) is provided with flexibilizing means consisting of a plurality of narrowing (29-30) of its cross section.

26. An assembly according to claim 1 wherein the spare inner wheel (3) forms recesses and ledges (24) on its base (23) which diminish its contact with the bottom of the annular depression (9).

27. An assembly according to claim 1 wherein the spare inner wheel (3) forms recesses and ledges (23, 25) on its periphery which diminish its contact with the inner surface (50) of the tire tread.

28. An assembly according to claim 1 wherein the spare inner wheels is crossed by a plurality of cross section openings (28) as easing and elasticity means.

29. An assembly according to claim 1 wherein on the outer surface of each lateral segment (13) of the tire rim, there are at least two blind holes (21) placed at the same radius height, equally-spaced separated to each other, as a means to modify on them, elements which facilitate threading and unthreading movements of the complementary annular parts (4, 5) of the tire rim to each other.

30. An assembly according to claim 1 wherein the complementary annular parts (4, 5) of the tire rim have all around the outer perimeter of the lip of the annular ledge and its adjacent parts, next to both side rims, a plurality of recesses and ledges (43) mutually equal and regularly spaced as a means to limit rotation of the tire (2) on the tire rim (1) upon running under flat condition.

31. An assembly according to claims 1 and 30 wherein the tire (2) presents all around of the perimeter of both inner edges of its minor diameter, a plurality of recesses and ledges (53) with the same manner and distribution of those (43) found on the tire rim (1).

## Patentansprüche

1. Eine auseinandernehmbare Felge mit innerem Notrad und dem Reifen für besagte Felge, die den Zweck verfolgt, als Aufsatz für zumindest ein inneres Notrad (3) und für einen Reifen (2) zu dienen, der aus einem Rad für Fahrzeuge besteht sowie aus zumindest einem inneren Notrad dessen Durchmesser größer ist, als der Rand besagter auseinandernehmbaren Felge, die Anwendung finden, wenn besagter Reifen luftleer ist, und welche:
a) einen Felgenkörper (1), mit einem Rand der aus zumindest zwei schlüssigen ringförmigen Teilen (4, 5) besteht, deren zwei seitlichen Teile zu beiden Seiten jeweils seitliche Halteringe (6-7a, 13-7b) für den Reifen aufweisen;
b) besagte schlüssige ringförmige Teile, die mit Vorrichtungen zur gegenseitigen Koppelung (10) versehen sind;
c) zwischen den beiden schlüssigen ringförmigen Teilen bilden sie Montiervorrichtungen (8, 9, 12, 17, 18) für zumindest das innere Notrad und
d) den mit dieser Felge und diesem inneren Rad zu benutzenden Reifen (2) einschließen, der Abänderungen zwecks Anpassung an das Rollen in luftleerem Zustand vorweist, wobei diese Abänderungen aus inneren Auswölbungen (50) bestehen, die auf der Innenseite des Laufbandes des Reifens und einem Reifenwulst (51) bestehen, welcher längs des Umfangs an beiden inneren Rändern des Reifens kleineren Durchmessers herausgebildet ist,
**gekennzeichnet dadurch, dass** die gegenseitigen Koppelungsvorrichtungen (10) aus einer Vielzahl von jeweiligen Bereichen mit Gewinden (40) längs des Randes des gesamten Umfangs beider schlüssigen Teilstücke (4, 5) des Felgenrands, die an einem ihrer Enden ein erhöhtes als Anschlag (41) ausgebildetes Stück zu gewindelosen (42) Bereichen aufweisen, deren Fläche bezüglich der Bereiche mit Gewinden tiefer liegt, wobei diese unterschiedlichen Bereiche einer gleichen Breite sind, so dass sie untereinander einrasten können, um mittels rotierender einschraubender Bewegungen befestigt zu werden.

2. Montierter Aufbau gemäß Anspruch 1, **gekennzeichnet dadurch, dass** die schlüssigen ringförmigen Teile (4, 5) größere Kontakt- und Justierungsflächen (11) aufweisen und mit den gegenseitigen Koppelungsvorrichtungen (10) zusammenwirkt.

3. Montierter Aufbau gemäß Anspruch 2, **gekennzeichnet dadurch, dass** die Kontakt- und Justierungsflächen (11) mit einer Vielzahl von ringförmigen konzentrischen Auswölbungen versehen sind, die eine Vorrichtung zum gegenseitigen Einfügen aufweisen.

4. Montierter Aufbau gemäß Anspruch 2-3, **gekennzeichnet dadurch, dass** zwischen den Kontakt- und Justierungsflächen (11) ein ringförmiges elastomerisches seitlich flaches Gefüge auftritt, dessen Flächen an den Seiten einheitlich sind.

5. Montierter Aufbau gemäß Anspruch 2-3, **gekennzeichnet dadurch, dass** zwischen den Kontakt- und Justierungsflächen (11) ein ringförmiges elastomerisches seitlich flaches Gefüge auftritt, mit einer Vielzahl von ringförmigen konzentrischen Rändern auf den Flächen beider Seiten.

6. Montierter Aufbau gemäß irgendeinem der vorstehenden Ansprüche, **gekennzeichnet dadurch, dass** die gegenseitigen Koppelungsvorrichtungen (10) mit den Anschluss- und Befestigungsvorrichtungen (19-19) ergänzt werden.

7. Montierter Aufbau gemäß Anspruch 6, **gekennzeichnet dadurch, dass** die Anschluss- und Befestigungsvorrichtungen (19-19) der schlüssigen ringförmigen Teile (4, 5) eine Vielzahl von gleichen und gleichweit voneinander entfernten Öffnungssätzen aufweisen, die an Falzen (20) entlang des Umfangs beider Ränder verteilt sind und die, gegenübergelagert, Durchlässe für Befestigungsschrauben (19) bilden.

8. Montierter Aufbau gemäß Anspruch 6, **gekennzeichnet dadurch, dass** die Anschluss- und Befestigungsvorrichtungen (19) der schlüssigen ringförmigen Teile (4, 5) eine Vielzahl von gleichen und gleichweit voneinander entfernten Öffnungssätzen aufweisen, die an Falzen (20) entlang des Umfangs beider Ränder verteilt sind und die, gegenübergelagert, Durchlässe für Stifte mit Sperrunterscheiben (19) bilden.

9. Montierter Aufbau gemäß Anspruch 1, **gekennzeichnet dadurch, dass** die Montiervorrichtungen für das innere Notrad aus einer ringförmigen Vertiefung (9) bestehen, deren seitliche Ränder (8, 12) mit beiden schlüssigen riongförmigen Teilen (4, 5) versehen sind.

10. Montierter Aufbau gemäß Anspruch 9, **gekennzeichnet dadurch, dass** die ringförmige Vertiefung (9) eine Bahn zum Gleiten und Rutschen für das innere Notrad (3) ist.

11. Montierter Aufbau gemäß Anspruch 9-10, **gekennzeichnet dadurch, dass** die ringförmige Vertiefung (9) ringförmige Rille (17) aufweist, die den Kontakt und die Reibungsfläche mit dem inneren Notrad verringern.

12. Montierter Aufbau gemäß Anspruch 1 und 9, **gekennzeichnet dadurch, dass** die Montiervorrichtungen für das innere Notrad (3) elastische seitliche Schließränder (15) für besagtes innere Notrad aufweist und besagte seitliche Schließränder gegen die seitlichen Ränder (8, 12) der schlüssigen ringförmigen Teile (4, 5) angeordnet sind und höher sind.

13. Montierter Aufbau gemäß Anspruch 1, **gekennzeichnet dadurch, dass** sie Montiervorrichtungen für mehr als ein Notrad (3) aufweist, welche aus einer ringförmigen Vertiefung (9) bestehen, die durch einen mittleren elastischen Ring (16) zumindest zweigeteilt ist.

14. Montierter Aufbau gemäß Anspruch 1, **gekennzeichnet dadurch, dass** die Montiervorrichtungen für das innere Notrad (3) die ringförmige Vertiefung (9) sowie Haltevorrichtungen (18) für die Seiten des besagten inneren Rads einschließen.

15. Montierter Aufbau gemäß Anspruch 14, **gekennzeichnet dadurch, dass** das innere Notrad (3) mit den Haltevorrichtungen (18) schlüssige Vorrichtungen (26) aufweist.

16. Montierter Aufbau gemäß Anspruch 1, **gekennzeichnet dadurch, dass** sie Rollvorrichtungen aufweist, welche wie ein Rollenlager (27) zwischen dem inneren Notrad (3) und dem Boden der ringförmigen Vertiefung (9) eingesetzt sind.

17. Montierter Aufbau gemäß Anspruch 1, **gekennzeichnet dadurch, dass** das innere Notrad (3) aus einem einzigen Material hergestellt ist.

18. Montierter Aufbau gemäß Anspruch 1, **gekennzeichnet dadurch, dass** das innere Notrad (3) aus einer Vielzahl von Segmenten besteht, die untereinander durch starke und flexible Verbindungsmittel verbunden sind.

19. Montierter Aufbau gemäß Anspruch 1, **gekennzeichnet dadurch, dass** das innere Notrad (3) aus elastomerischem Material hergestellt ist.

20. Montierter Aufbau gemäß Anspruch 1, **gekennzeichnet dadurch, dass** das innere Notrad (3) aus Kunststoff hergestellt ist.

21. Montierter Aufbau gemäß Anspruch 1, **gekennzeichnet dadurch, dass** das innere Notrad (3) aus einem leichten Material hergestellt ist.

22. Montierter Aufbau gemäß Anspruch 1, **gekennzeichnet dadurch, dass** das innere Notrad (3) aus Kunstfasern und einem diese verdichtenden Stoff hergestellt ist.

23. Montierter Aufbau gemäß Anspruch 1, **gekennzeichnet dadurch, dass** das innere Notrad (3) über einen inneren Mittelteil zur Verstärkung der Struktur (33) verfügt.

24. Montierter Aufbau gemäß Anspruch 1, **gekennzeichnet dadurch, dass** das innere Notrad (3) an seinem flächengrößerem Durchmesser eine Metallverkleidung (31) aufweist, die mit einer äußeren Schicht (32) versehen ist, welche aus einem polytetrafluorethylen Polymer (PTFE) besteht.

25. Montierter Aufbau gemäß Anspruch 1, **gekennzeichnet dadurch, dass** das innere Notrad (3) mit flexibilisierenden Vorrichtungen versehen ist, die aus einer Vielzahl von Verengungen (29-30) ihres Querschnitts bestehen.

26. Montierter Aufbau gemäß Anspruch 1, **gekennzeichnet dadurch, dass** das innere Notrad (3) Kerben und Auswölbungen (24) an seiner Grundfläche (23) bildet, welche dessen Kontakt zum Boden der ringförmigen Vertiefung (9) verringern.

27. Montierter Aufbau gemäß Anspruch 1, **gekennzeichnet dadurch, dass** das innere Notrad (3) Kerben und Auswölbungen (23-25) an seinem Kreisumfang bildet, was dessen Kontakt zur inneren Seite (50) der Lauffläche des Reifens verringert.

28. Montierter Aufbau gemäß Anspruch 1, **gekennzeichnet dadurch, dass** das innere Notrad (3) eine Vielzahl von quer durchbrochenen Öffnungen (28) aufweist, um Leichtigkeit und Elastizität zu erreichen.

29. Montierter Aufbau gemäß Anspruch 1, **gekennzeichnet dadurch, dass** an der äußeren Fläche des jeweiligen seitlichen Bereichs (13) der Felge zumindest zwei blinde Löcher (21) auf gleicher Höhe des Radius' untereinander gleichweit vorliegen, und zwar um in ihnen Vorrichtungen abzuändern, welche die Einschraub- und Ausschraubbewegungen der schlüssigen ringförmigen Teile (4, 5) der Felge erleichtern.

30. Montierter Aufbau gemäß Anspruch 1, **gekennzeichnet dadurch, dass** die schlüssigen ringförmigen Teile (4, 5) der Felge um den gesamten äußeren Umfang der Lippe der ringförmigen Auswölbung und deren anliegenden Teile, nächst beiden seitlichen Ringen, eine Vielzahl von untereinander gleichen und regelmäßig entfernten Kerben und Auswölbungen (43), als Mittel zur Einschränkung der Drehung des Reifens (2) um die Felge (1) beim Rollen in luftleerem Zustand aufweisen.

31. Montierter Aufbau gemäß Anspruch 1 und 30, **gekennzeichnet dadurch, dass** der Reifen (2) um den gesamten Umfang beider inneren Ränder seines kleineren Durchmessers eine Vielzahl von Kerben und Auswölbungen (53) selbiger Form und Verteilung wie jene (43), welche die Felge (1) aufweist.

## Revendications

1. Jante susceptible d'être déchiquetée avec une roue intérieure d'émergence et le pneu pour la dite jante, laquelle est destinée à servir de montage au moins pour une roue intérieure d'émergence (3) et un pneu (2) lequel se compose d'une roue pour des véhicules et au moins une roue intérieure d'émergence dont le diamètre est plus grand que celui du bord de la dite jante susceptible d'être déchiquetée, qui accomplissent leur fonction en étant avec le précité pneu dégonflé qui comprennent ::
a) Un corps de jante (1) avec un bord qui tient au moins, à deux parties annulaires complémentaires (4, 5) dont les deux parties latérales offrent, à chaque côté, deux anneaux de contention latérale (6-7a, 13-7a) du pneu ;
b) Les deux parties annulaires complémentaires sont fournies de moyens d'accouplement réciproques (10) ;
c) Entre les deux parties annulaires complémentaires forment des moyens de montage (8, 9, 12, 17, 18) en ce qui concerne, au moins, la roue intérieure d'émergence ; et
d) Le pneu (2) à être utilisée avec cette jante et roue intérieure, présente des modifications afin d'être adapté au rodage à plat ; lesdites modifications tenant à des saillies intérieures (50) formées à l'intérieur de la bande de rodage du pneu et un talon (51) formé autour du périmètre sur les deux bords internes du pneu d'un diamètre mineur.
**caractérisé par**ce que
Les moyens d'accouplement réciproques (10) consistent en une pluralité de deux secteurs filetés (40) sur le bord de tout le périmètre des deux parties annulaires complémentaires (4, 5) du bord de la jante qui ont, à l'un de leurs extrêmes, une partie relevée (41) qui opère comme arrêt, inséré avec des secteurs non filetés (42) dont la surface se trouve à un niveau inférieur par rapport aux secteurs filetés, ces différents secteurs étant du même large, afin qu'ils puissent être encastrés entre eux, pour être fixés au moyen de mouvements rotatoires de filetage.

2. Un montage en accord avec la revendication 1, **caractérisé en** raison de la plus grande surface de contact et d'ajustement qui possèdent ses parties annulaires complémentaires (4, 5) ce qui permet de coopérer avec les moyens d'accouplement réciproques (10).

3. Un montage en accord avec la revendication 2, **caractérisé par**ce que les surfaces de contact en raison de la pluralité de saillies annulaires concentriques dont sont fournies les surfaces de contact et d'ajustement (11), possèdent un arrangement réciproque d'insertion.

4. Un montage en accord avec les revendications 2-3, **caractérisé en** raison de la fourniture entre les surfaces de contact et d'ajustement, d'un assemblage élastomérique annulaire latéralement plaine dont les surfaces des côtés son uniformes.

5. Un montage en accord avec les revendications 2-3, **caractérisé en** raison de la fourniture entre les surfaces de contact et d'ajustement, d'un couplage élastomérique annulaire latéralement plaine avec une pluralité de bords annulaires concentriques sur les surfaces des deux côtés.

6. Un montage en accord avec n'importe quelle des revendications précédentes **caractérisé en** raison d'être, les moyens d'accouplement réciproques, complémentés par des moyens d'interconnexion e fixation (19-19).

7. Un montage en accord avec la revendication 6, **caractérisé par**ce que les moyens de interconnexion et fixation (19-19) entre les parties annulaires complémentaires (4, 5) possèdent une pluralité d'ensembles d'ouvertures égales, placées de façon équidistante, distribuées sur des talons (20) situées sur le périmètre des deux bords, lesquelles mises vis-à-vis forment des voies pour les étaux de fixation (19).

8. Un montage en accord avec la revendication 6, **caractérisé par**ce que les moyens d'interconnexion et fixation (19) entre les parties annulaires complémentaires (4, 5) consistent en une pluralité des ensembles d'ouvertures égales, placées de façon équidistante, distribuées sur des talons (20) situées sur le périmètre des deux bords, lesquelles quand elles sont mises vis-à-vis forment des voies pour des boulons aux entraves (19).

9. Un montage en accord avec la revendication 1, **caractérisé par**ce que les moyens de montage pour la roue intérieur d'émergence sont composés par une dépression annulaire (9) dont les bords latéraux (8, 12) sont fournis par les deux parties annulaires complémentaires (4, 5).

10. Un montage en accord avec la revendication 9, **caractérisé par**ce que la dépression annulaire (9) constitue une piste de glissement et dérapage pour la roue intérieure d'emergence (3).

11. Un montage en accord avec les revendications 9-10, **caractérisé par**ce que la dépression annulaire (9) présente des rainures annulaires (17) lesquelles diminuent le contact et la surface de frottement avec la roue intérieure d'emergence.

12. Un montage en accord avec les revendications 1 et 9, **caractérisé par**ce que les moyens de montage pour la roue intérieure d'émergence (3) possèdent des bords élastiques de contention latérale (15) de ladite roue intérieure d'emergence ; et lesdits bords de contention latérale sont disposés contre les bords latéraux (8,12) fournis par tous deux les parties annulaires complémentaires (4, 5), en surpassant la hauteur des mêmes.

13. Un montage en accord avec la revendication 1, qui possède les moyens de montage pour plus d'une roue intérieure d'émergence (3) dont les moyens consistent en une dépression annulaire (9), partagée en deux secteurs, au moins, par, au moins, un anneau élastique intermédiaire (16).

14. Un montage en accord avec la revendication 1, **caractérisé par**ce que les moyens de montage concernant la roue intérieure d'émergence (3) incluent la dépression annulaire (9) et des moyens de rétention des côtés (18) de la dite roue intérieure.

15. Un montage en accord avec la revendication 14, **caractérisé par**ce que la roue intérieure d'emergence (3) forme des moyens de coopération (26) avec les moyens de rétention (18).

16. Un montage en accord avec la revendication 1, qui possède des moyens de roulement lesquels comme des coussinets de rouleau (27) sont insérés entre la roue intérieure d'emergence (3) et le fond de la dépression annulaire (9).

17. Un montage en accord avec la revendication 1, **caractérisé par**ce que la roue intérieure d'emergence (3) est faite d'un seul matériau.

18. Un montage en accord avec la revendication 1, **caractérisé par**ce que la roue intérieure d'emergence (3) consiste en une pluralité de segments mutuellement rapportés par des moyens forts et flexibles d'union.

19. Un montage en accord avec la revendication 1, **caractérisé par**ce que la roue intérieure d'emergence (3) est faite d'un matériau élastomérique.

20. Un montage en accord avec la revendication 1, **caractérisé par**ce que la roue intérieure (3) est faite d'un matériau plastique.

21. Un montage en accord avec la revendication 1, **caractérisé par**ce que la roue intérieure d'émergence (3) est faite d'un matériau léger.

22. Un montage en accord avec la revendication 1, **caractérisé par**ce que la roue intérieure d'émergence (3) est faite de fibres synthétiques et d'un matériau servant à le rendre compact.

23. Un montage en accord avec la revendication 1, **caractérisé par**ce que la roue intérieure d'émergence (3) possède un centre interne de renforcement structural (33).

24. Un montage en accord avec la revendication 1, **caractérisé par**ce que la roue intérieure d'émergence (3) est fournie d'un revêtement métallique (31) dans son diamètre dont la surface est plus grande, fourni d'une couche extérieure (32) constituée par un polymère politétrafluorure éthylène (PTFE).

25. Un montage en accord avec la revendication 1, **caractérisé par**ce que la roue intérieure d'émergence (3) est douée des moyens de flexibilisation consistant en un pluralité de rétrécissements (29-30) de sa section transversale.

26. Un montage en accord avec la revendication 1, **caractérisé par**ce que la roue intérieure d'émergence (3) forme des enfoncements et des saillies (24) sur sa base (23) lesquelles diminuent leur contact avec le fond de la dépression annulaire (9).

27. Un montage en accord avec la revendication 1, **caractérisé par**ce que la roue intérieure d'émergence (3) forme des enfoncements et des saillies (23,25) sur la périphérie ce qui diminue son contact avec la surface intérieure (50) de la bande de rodage du pneu.

28. Un montage en accord avec la revendication 1, **caractérisé par**ce que la roue intérieure d'émergence (3) est traversée par une pluralité d'ouvertures transversales (28) en tant que moyens d' allègement et élasticité.

29. Un montage en accord avec la revendication 1, **caractérisé par**ce que dans la surface extérieure de chaque segment latéral (13) de la jante, il y a au moins deux trous aveugles (21) placés à la même hauteur du radio posés de façon équidistante entre eux, en tant que moyens servant à modifier chez eux, des éléments qui rendent plus facile le mouvement de filetage et de dévissage des parties annulaires complémentaires (4,5) de la jante.

30. Un montage en accord avec la revendication 1, **caractérisé par**ce que les parties annulaires complémentaires (4, 5) de la jante possèdent tout autour du périmètre extérieur du lèvre de la saillie annulaire et de ses parties adjacents, près des deux ceintures latérales, une pluralité d'enfoncements et des saillies (43) égaux entre eux et régulièrement espacés en tant que moyens pour limiter la rotation du pneu (2) sur la jante (1) lors du rodage en état dégonflé.

31. Un montage en accord avec la revendication 1 et 30, **caractérisé par**ce que le pneu (2) présente tout autour du périmètre des deux bords intérieurs de son diamètre plus petit, une pluralité d'enfoncements et des saillies (53) de la même forme et distribution de ceux (43) qui se trouvent dans la jante (1).
